# EUROPEAN PATENT APPLICATION

(11) **EP 4 166 694 A1**
(43) Date of publication of application: **19.04.2023**
(21) Application number: 22200066.3
(22) Date of filing: 06.10.2022
(51) Int. Cl.: C25D 3/22, C25D 7/06, C25D 5/48, C25D 5/50, C25D 5/00, B23H 1/00

(54) **ELECTRODE WIRE FOR ELECTRICAL DISCHARGE MACHINING AND MANUFACTURING METHOD FOR THE SAME**

(30) Priority: 18.10.2021 CN 202111210891
(71) Applicant: Ningbo Bode Hightech Co., Ltd, Zhejiang 315137 (CN)
(72) Inventor: Wu, Tong, Ningbo, 315137 (CN); Luo, Xiaoqi, Ningbo, 315137 (CN); Liang, Zhining, Ningbo, 315137 (CN); Lin, Huogen, Ningbo, 315137 (CN); Chen, Yibo, Ningbo, 315137 (CN)
(74) Representative: Petraz, Gilberto Luigi

(57) **Abstract**

Provided is an electrode wire for electrical discharge machining and a manufacturing method for the same. The electrode wire includes a brass core, a Cu-Zn alloy layer formed on the brass core, and a surface layer disposed on the Cu-Zn alloy layer. The surface layer is in the shape of particles or sheets, and the Cu-Zn alloy layer is exposed with respect to spaces between the particles or sheets. The surface layer includes CuO, ZnO, Cu₂(OH)₂CO₃, and a Cu-Zn intermetallic compound.

## Description

### TECHNICAL FIELD

The disclosure relates to the field of electrical discharge machining, and more particularly, to an electrode wire for electrical discharge machining and a manufacturing method for the same.

### BACKGROUND

Electrical discharge machining, referred to as EDM for short, was first proposed by Lazarenko in the Soviet Union in 1943. EDM is a manufacturing process whereby electric spark is continuously generated between electrodes to ablate an electrode material.

EDM can be divided into Sinker EDM, Electrical Discharge Grinding (EDG), Wire cut Electrical Discharge Machining (WEDM), etc. according to a form of a tool electrode and movement of a tool electrode relative to a workpiece.

The basic principle of WEDM is to apply a sufficiently strong voltage between the workpiece and the tool electrode to generate an electric spark, and the voltage should be higher than the breakdown voltage of the gap between the workpiece and the tool electrode. In the initial stage of applying voltage between the workpiece and the tool electrode, a strong electric field will be generated, and positive and negative ions are gathered around the workpiece and the tool electrode. Under the action of the electric field, the electrons and positive ions are accelerated to a high speed, the electrons move to the positive electrode, and the positive ions move to the negative electrode, thereby forming an ionization channel, which breaks down the insulation medium between the workpiece and the tool electrode. During this stage, the electrons and positive ions continually collide with each other, and impact the surface of the positive electrode and the negative electrode at high speed respectively. In this way, the kinetic energy is converted into heat energy, a plasma region is formed with extremely high temperature, and the temperature can reach 10000°C. Parts of the workpiece and the tool electrode are instantly melted or gasified due to high temperature, and corrosion pits are formed on both of the workpiece and the tool electrode. Meanwhile, the liquid insulation medium between the workpiece and the tool electrode is also gasified due to high temperature. During the above process, the gasification of the material and liquid medium will produce a bubble with a rapidly expanding volume. Then, the current is interrupted, and the sudden drop in temperature causes the bubble to explode, flushing remaining molten material in the discharge pit into the liquid insulation medium, and the material ablated by the electric spark cools down in the insulation medium to form tiny spheres, which are rinsed by the liquid insulation medium, and the insulation state is restored intermittently, forming a discharge cycle. This process is repeated tens of thousands to hundreds of thousands of times per second.

WEDM includes fast-feeding wire cut electrical discharge machining and slow-feeding wire cut electrical discharge machining according to the material and moving direction of a cut wire. In the fast-feeding wire cut electrical discharge machining, a molybdenum wire with a high melting point is typically used to move in a reciprocating way so as to achieve electrical discharge machining. Although such process is cost-effective, the molybdenum wire loses a lot owing to repeated use, reducing the machining accuracy and surface finish of the workpiece. In the slow-feed wire cut electrical discharge machining, copper or copper alloy is typically used as an electrode wire, and the electrode wire moves directionally, which is costly compared to high-speed wire cut electrical discharge machining. In general slow-feed wire cut electrical discharge machining, the machining process is completed by a first rough cutting and several (for example, less than 7) trimmings. Through multiple trimmings, the dimensional accuracy of the workpiece being cut is relatively high, and the surface finish of the workpiece is relatively good.

For slow-feeding wire cut electrical discharge machining, it is desired to improve the cutting speed, the cutting accuracy and the surface finish. The brass electrode wire widely used is cheap and operates at low cutting speeds, and provides poor processing accuracy and surface finish of the workpiece. With the development of the manufacturing industry, the requirements for product quality are getting higher and higher, and the brass electrode wire can no longer meet these requirements. As a result, a galvanized electrode wire is developed. The galvanized electrode wire on the market is generally divided into three categories according to the composition and the use of the coating.

The first type of galvanized electrode wire is a high precision galvanized electrode wire with a coating made of pure zinc or alloy with high content zinc. Since zinc and alloy with high content zinc have certain ductility, the surface of the coating is generally smooth, and the coating is relatively thin. Accordingly, the discharging in finishing machining is stable, thereby reducing the micro-cracks of the workpiece generated due to capacitance effect, and thus the surface finish of the workpiece to be cut is better. Therefore, such type of galvanized electrode wire is widely used in finishing machining required more than 4 cuttings. The disadvantage of such type of galvanized electrode wire is that the zinc coating is not resistant to electric sparks erosion, easy to fall off, leading to slow cutting speed.

The second type of galvanized electrode wire is a high-speed galvanized electrode wire with a coating consisting of β-phase or β+γ phase composition, or β'+γ phase or β' phase composition. The coating is thick, and is resistant to erosion compared with the zinc coating. As a result, the effect of gasification and rinsing is strong and continuous, and the cutting speed is high. The disadvantage of such type of galvanized electrode wire is that the electrical conductivity of the surface of the electrode wire is significantly reduced due to the thick coating and the deep cracks. As a result, the fast-feeding electrode wire cannot discharge under the weaker discharge energy, leading to a short circuit, and the discharge uniformity during finishing machining is deteriorated. Therefore, such type of galvanized electrode wire is not suitable for finishing machining required more than 4 cuttings.

The third type of galvanized electrode wire is an improved galvanized electrode wire. The improved galvanized electrode wire is widely used, because it is faster compared with the high-precision galvanized electrode wire, and can adapt to multi-cutting finishing machining compared with the high-speed galvanized electrode wire.

Generally speaking, the user always pursues processing efficiency. However, the above galvanized electrode wires in the related art have a common deficiency: the coating is made of copper-zinc alloy, as restricted by the performance of the copper-zinc alloy, the thickness of the coating should be increased if it is desired to increase the cutting speed, which increases the depth and the width of the crack, and the number of cracks. However, the finishing performance of the galvanized electrode wire will be affected, and the surface finish of the processed workpiece becomes worse. In other words, the galvanized electrode wire of the related art fails to achieve high cutting speed while keeping good surface finish of the processed workpieces, which is urgently to be improved.

### SUMMARY

An objective of the disclosure is to provide an electrode wire for EDM so as to increase the cutting speed and improve the surface finish of the workpiece being cut.

A solution of the disclosure is to provide an electrode wire for EDM, including a brass core, a Cu-Zn alloy layer formed on the brass core, and a surface layer disposed on the surface of Cu-Zn alloy layer. The surface layer is in the shape of particles or sheets, and the Cu-Zn alloy layer is exposed with respect to spaces between the particles or sheets. The surface layer includes CuO, ZnO, Cu₂(OH)₂CO₃, and a Cu-Zn intermetallic compound.

The following advantages are associated with the electrode wire for EDM of the disclosure:

It is found that, during a WEDM process, the cutting speed varies with factors such as a discharging time of an electric spark, a discharging interval, an electric current, a melting point and a gasification point of the material. The longer the discharge time, the longer the duration of the electric spark and the larger the corrosion pit; the smaller the discharging interval, the higher the discharging frequency, and the more the number of corrosion pits within the same time; the greater the current during discharging, the more heat generated by the electric spark and the larger the corrosion pit; all these make the cutting speed faster. Furthermore, the cutting speed is affected by the properties of the material of both the workpiece to be cut and the electrode wire. The spark is easy to ablate a workpiece made from material having a low melting point or gasification point, resulting in massive and deep corrosion pits in the workpiece. If the electrode wire is made from material having a low gasification point, the electrode wire is easily evaporated while being ablated. As a result, a high vapor pressure is generated to rinse molten melt from the corrosion pits to the liquid insulation medium.

Further, it is also found that the thermal conductivity of the electrode wire material is also a factor that affects the formation of the corrosion pits. The spark-generated heat is easily concentrated on the surface of the electrode wire made of material having a low thermal conductivity, and a high vapor pressure is produced while the material of the electrode wire is evaporated, improving the rinsing effect and increasing the cutting speed.

It is also found that, when the EDM conditions of a machining tool and the material to be cut are constant, how to improve the cutting speed and the surface finish of the workpiece depends on the electrode wire.

A conventional electrode wire typically includes a brass core coated with a zinc coating including zinc or alloys of copper and zinc. At room temperature, brass such as CuZn37 has a thermal conductivity of 116.7 W•(m•K)⁻¹; zinc has a thermal conductivity of 116 W•(m•K)⁻¹; and copper has a thermal conductivity of 386.4 W•(m•K)⁻¹. The electrode wire of the disclosure includes the surface layer consisting of components such as CuO or ZnO which has a lower thermal conductivity than the material of the conventional electrode wire; at room temperature, CuO has a thermal conductivity of 32.6 W•(m•K)⁻¹; and ZnO has a thermal conductivity of 29.98 W•(m•K)⁻¹; and the thermal conductivity of ZnO is decreased at high temperatures. Therefore, by applying an electrode wire having the above configurations or components to the EDM, the spark-generated heat is concentrated on the surface of the electrode wire of the disclosure. In this way, a high vapor pressure is obtained when CuO, ZnO, Cu₂(OH)₂CO₃, and the Cu-Zn intermetallic compound in the surface layer evaporates or decomposes, thus the rinsing effect is improved. Further, the surface layer is disposed on the surface of the electrode wire in the shape of the sheets or particles, which can ensure a continuous rinsing effect during the discharging process and further ensure a high cutting speed for the electrode wire of the disclosure.

Those skilled in the art know that the surface of a workpiece being cut includes a plurality of tiny corrosion pits. In the present disclosure, in order to obtain better surface finish of the workpiece during the finishing process, the cutting speed is reduced so that the size of the corrosion pits is reduced. CuO, ZnO, Cu₂(OH)₂CO₃, and the Cu-Zn intermetallic compound included in the surface layer of the electrode wire of the present disclosure cause a decrease in the conductivity of the surface layer. Since the discharge energy is high during the rough cutting, the decrease in the conductivity has no effect on the rough cutting. As the finishing process progresses, the discharge energy decreases, causing the surface layer with decreased conductivity thus obstructing the flow of electrons; as a result, the formation of an ionization channel is delayed, shortening the discharge time, forming narrow corrosion pits, ensuring the finishing performance of the electrode wire and enhancing the surface finish of the workpiece being cut.

That is to say, the electrode wire for EDM provided in the present disclosure offers advantages in high cutting speed and good surface finish of the workpiece.

In a class of this embodiment, the surface layer includes 4%~9.5% by mass of CuO, 44%~55% by mass of ZnO, 2%~10% by mass of Cu₂(OH)₂CO₃, and 31%~44.5% by mass of the Cu-Zn intermetallic compound, and thus the conductivity of the surface layer is significantly reduced, improving the surface finish of the workpiece being cut.

In a class of this embodiment, the surface layer includes several micropores each having a diameter of 0.01~2 µm in a cross section of the electrode wire. Through such a structure, the micropores in the surface layer increase a contact area between the surface of the electrode wire and the liquid insulation medium, which further improves a cooling effect of the electrode wire, thus significantly increasing the cutting speed of the electrode wire during rough machining.

In a class of this embodiment, 60%~95% of the surface of the Cu-Zn alloy layer is covered by the surface layer. Through such structure, the cutting speed and the surface finish of the workpiece being cut increase as the area of the surface of the electrode wire being covered by the surface layer increases.

In a class of this embodiment, the surface layer has a thickness ranging from 2 µm to 7 µm. Through such a structure, the thickness range can maintain the conductivity of the electrode wire required for the finishing, so that the ionization channel is formed in a discharge cycle during the finishing process, thus generating an electric spark discharge and placing the tools in an appropriate place to further improve the surface finish of the workpiece being cut.

In a class of this embodiment, the Cu-Zn alloy layer includes a β' phase component or a β'+γ phase component. Through such a structure, a continuous rinsing effect of the electrode wire of the present disclosure is further achieved and the cutting speed is increased.

In a class of this embodiment, the Cu-Zn alloy layer has a thickness of 4~10 µm. Through such a structure, a continuous rinsing effect of the electrode wire of the present disclosure is further achieved and the cutting speed is increased.

Another objective of the disclosure is to provide a manufacturing method for any of the electrode wires for the electric charge machining provided above. The produced electrode wire includes a brass core, a Cu-Zn alloy layer disposed on the brass core, and a surface layer. The surface layer is in the shape of particles or sheets spaced apart on the Cu-Zn alloy layer, and the Cu-Zn alloy layer is exposed with respect to spaces between the particles or sheets. The surface layer includes CuO, ZnO, Cu₂(OH)₂CO₃, and a Cu-Zn intermetallic compound. The electrode wire can increase the cutting speed and improve the surface finish of the workpiece being cut.

Another solution of the present disclosure is to provide a manufacturing method for any of the electrode wires for the electric charge machining provided above. The method includes following steps:
1) preparing a brass core with a diameter of 0.6∼0.9 mm;
2) forming a zinc coating on the surface of the brass core obtained in step 1) through an electroplating process during which an electroplating solution including organic saccharide additives is used, during the electroplating process, the organic saccharide additives absorb zinc ions and slow down a cathodic reduction reaction of the zinc ions, causing a crystallization rate of the zinc coating to slow down and refining crystalline grains of the zinc coating, thereby forming a dense, hard, and brittle zinc coating containing the organic saccharide additives, where a concentration of the organic saccharide additives is 8~25 g/L, an electroplating rate is 200-400 m/min, an electric current is 965~1350 A, an electric voltage is 5.2~7V and the zinc coating has a thickness of 4.5∼9µm;
3) first stretching and extruding, by using a wire drawing die, a rod obtained through the electroplating process so that the diameter of the wire is 0.47∼0.62 mm, during the stretching and extruding, the zinc coating which is dense, hard and brittle cracks in a direction perpendicular to an axis of the wire and at an acute angle of greater than 30 degrees with respect to the axis of the wire, that is, yielding a rod with several cracks which is obtained by first stretching and extruding the zinc coating;
4) heating, at 200~400°C, the rod with cracks which is obtained by first stretching and extruding the zinc coating in a furnace for 2~10 hours, cooling the furnace to less than 150°C and taking the rod out of the furnace, thus obtaining a heat-treated rod including a continuous Cu-Zn alloy layer and a coating layer with several cracks, where air is continuously supplied to the furnace during the heating process; and
5) stretching and extruding, by using the wire drawing die, the heat-treated rod again to obtain an electrode wire having a diameter of 0.15∼0.30 mm, and the electrode wire includes a surface layer in the shape of particles or sheets, and the Cu-Zn alloy layer is exposed with respect to spaces between the particles or sheets.

The electrode wire for the electric charge machining produced through the above steps includes a brass core, a Cu-Zn alloy layer formed on the brass core, and a surface layer disposed on the surface of the Cu-Zn alloy layer. The surface layer is in the shape of sheets or particles, the Cu-Zn alloy layer is exposed with respect to the spaces between the sheets or particles; and the surface layer includes CuO, ZnO, Cu₂(OH)₂CO₃, and the Cu-Zn intermetallic compound.

The electrode wire manufactured by the above method has a low gasification point. When being ablated, the electrode wire is easier to gasify and a higher gasification pressure is generated, so that the molten metal material in the corrosion pit is easily flushed into the liquid insulation medium. The thermal conductivity of the electrode wire is low, so that the heat generated by the electric spark is more concentrated on the surface of the electrode wire, and the material on the electrode surface generates a stronger gasification pressure when being gasified, thus further improving the rinsing effect and cutting speed. CuO, ZnO, Cu₂(OH)₂CO₃, and the Cu-Zn intermetallic compound included in the surface layer of the electrode wire may lead to a decrease in the conductivity of the surface layer. Such decease has little effect on the rough cutting process because the discharge energy is extremely high. As the finishing process progresses, the discharge energy decreases, and the surface layer with decreased conductivity further obstructs the flow of the electrons; as a result, the formation of an ionization channel is delayed, shortening the discharge time, forming narrow corrosion pits, thus enhancing the surface finish of the workpiece. Therefore, the electrode wire of the disclosure can increase the cutting speed and improve the surface finish of the workpiece, thus achieving a fast cutting speed and good surface finish of the workpiece concurrently.

In a class of this embodiment, the organic saccharide additives refer to sucrose, lactose and/or maltose. Through the above steps, the zinc coating in step 2) achieves greater density and hardness so that CuO, ZnO, Cu₂(OH)₂CO₃, and the Cu-Zn intermetallic compound are retained in the surface layer.

In a class of this embodiment, a stretching-extruding rate of the first stretching in step 3) is 35%~65%; and the stretching-extruding rate of the second stretching in step 5) is 55%~95%. Through the above steps, the dense, hard and brittle zinc coating of the rod subjected to the first stretching, cracks in a direction perpendicular to an axis of the rod and at an acute angle of greater than 30 degrees with respect to the axis of the rod, thereby achieving a coverage rate of the surface layer; and the surface layer, including the sheets and particles, meets the requirements of fast cutting speed and good surface finish of the workpiece. Understandably, the term "an acute angle of greater than 30 degrees" refers to an acute angle ranging from 30° to 90°.

### BRIEF DESCRIPTION OF THE DRAWINGS

FIG. 1 is a perspective view of a rod with cracks that is obtained by stretching and extruding a zinc coating of the disclosure;
FIG. 2 is a cross-sectional view of a rod with cracks that is obtained by stretching and extruding a zinc coating of the disclosure;
FIG. 3 is a cross-sectional view of a heat-treated rod obtained after first stretching and extruding of the disclosure; and
FIG. 4 is a cross-sectional view of a finished electrode wire obtained by second stretching and extruding of the disclosure.

### List of Reference symbols

1. Crack; 2. Brass core; 3. Zinc coating; 4. Surface layer; 5. Cu-Zn alloy layer; and 6. Micropore.

### DETAILED DESCRIPTION

Specific embodiments of the present disclosure will be further described below with reference to the accompanying drawings. It should be stated that the description of these specific embodiments is used to help the understanding of the present disclosure, but does not constitute a limitation of the present disclosure. In addition, the technical features involved in the specific embodiments described below can be combined with each other as long as they do not conflict with each other.

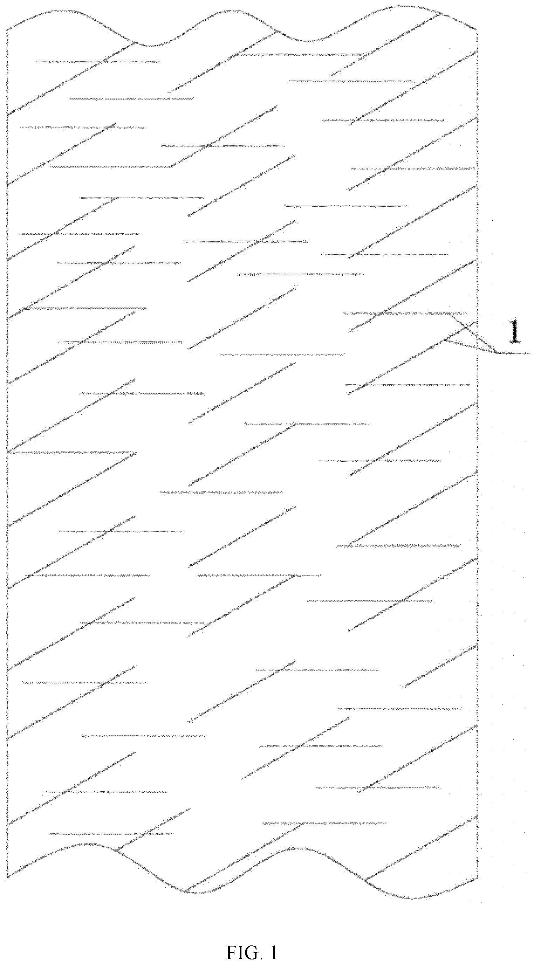

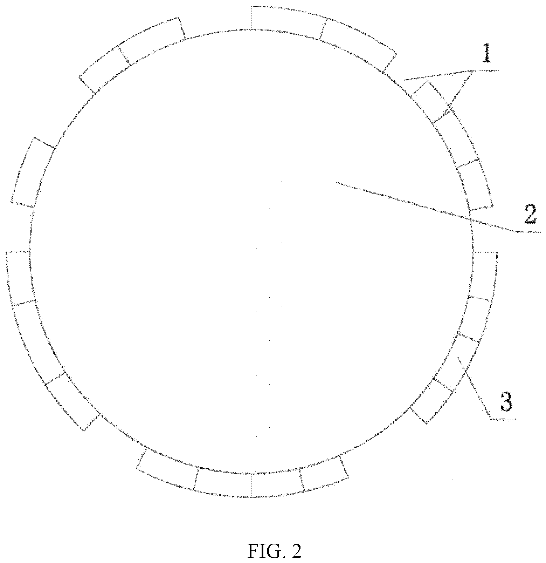

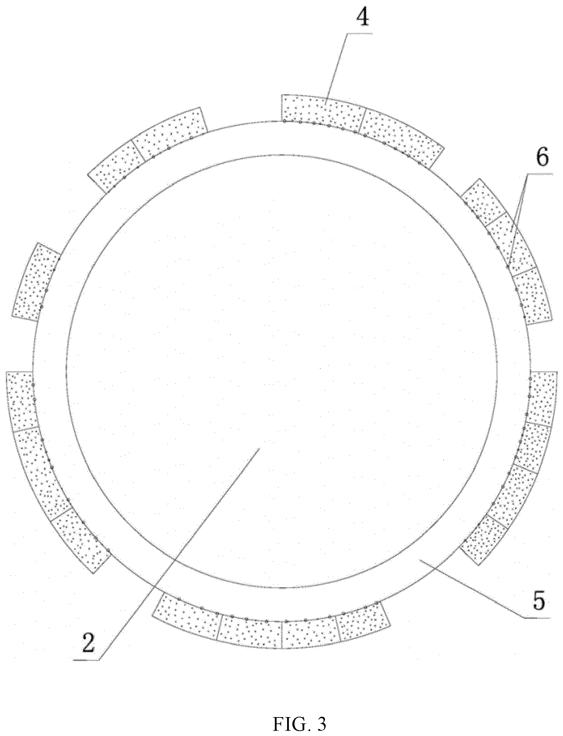

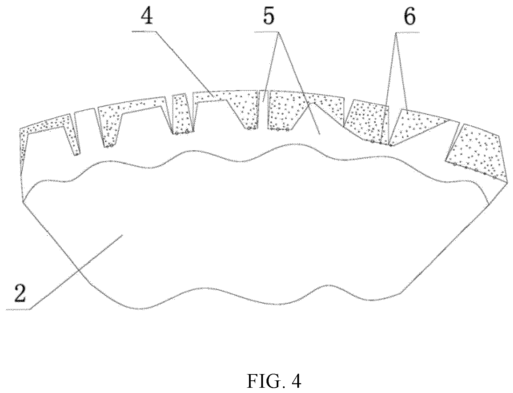

Referring to FIGS. 1, 2, 3, and 4, before illustrating specific examples of an electrode wire for electrical discharge machining (EDM) of the present disclosure, some supplementary explanations are made on structural features, composition and preparation principle of the electrode wire for EDM and the manufacturing method of the present disclosure.

The above brass core 2 generally refers to a core made from brass material such as CuZn37 or CuZn40.

As used herein, the term "sheets" spaced apart on the surface of the electrode wire also refers to blocks.

CuO represents copper oxide; ZnO represents zinc oxide; and Cu₂(OH)₂CO₃ represents basic copper carbonate, which is also referred to as patina.

The rod with several cracks 1 obtained by first stretching and extruding the zinc coating 3 can be understood based on the followings. A conventional electrode wire includes an organic saccharide additives-free zinc coating having great ductility and plastic toughness. When being stretched and extruded by a wire drawing die, the zinc coating becomes uniformly thin without formation of cracks. In other words, a conventional process of electroplating of the electrode wire typically uses boric acid and aluminum sulfate as PH buffers and uses ammonium chloride as a conductive salt, and all of boric acid, aluminum sulfate and ammonium chloride are inorganic non-saccharide additives. On the contrary, the electroplating process of the disclosure uses organic saccharide additives rather than inorganic additives, such as boric acid, aluminum sulfate and ammonium chloride, to absorb zinc ions and slow down a cathodic reduction reaction of the zinc ions, thus increasing cathodic polarization. Accordingly, the zinc coating crystallizes slowly, which facilitates the formation of fine crystals, thus forming a dense, hard, and brittle zinc coating. Further, the organic saccharide additives absorbed in the zinc coating increase a stress inside the zinc coating, making the zinc coating harder and more brittle. Therefore, the dense, hard and brittle zinc coating is easy to crack when stretched and extruded by the drawing die. Therefore, several cracks 1 appear on the zinc coating, and the crack is in a direction perpendicular to an axis of the electrode wire and at an angle of greater than 30 degrees with respect to the axis of the electrode wire. That is to say, the cracks 1 are transverse cracks and diagonal cracks relative to the axis of the electrode wire.

On the other hand, a process of forming metallic crystals by electroplating can be divided into the following processes carried out simultaneously: crystal nucleation and crystal growth. The size of the crystals is affected by the rate of each process. In the electroplating, when the rate of crystal nucleation is greater than the rate of crystal growth, a dense and tightly packed zinc coating is formed. During the electroplating process, when adsorption occurs on localized sites on the surface of an electrode, it is hard to perform an electrode reaction on these localized sites. As a result, the electrode reaction stops or slows. In other words, an effective area of the electrode decreases, so that an effective current density across the electrode increases, thus enhancing the polarization effect. When adsorption occurs on the entire surface of the electrode, reaction particles need to pass through an adsorption layer on the interface to react, which makes the electrode reaction more difficult. In other words, the electrochemical reaction process is blocked, thereby increasing the polarization effect. It should be note that, the term "electrode" as used herein refers to the brass core prepared in step 1). The method of the disclosure increases the cathodic polarization so as to increase the rate of crystal nucleation, thus obtaining the zinc coating with high-density crystals. The zinc coating with high-density crystals and adsorbed with organic saccharide additives becomes very hard and brittle, and is easy to crack when stretched and extruded by the drawing die. In other words, several cracks 1 occur.

Preferably, the organic saccharide additives include sucrose, lactose and/ or maltose. Please note that the organic saccharide additives can be sucrose alone, or lactose alone, or maltose alone, or a mixture of any two of them, or a mixture of three of them.

Several micropores **6** are distributed in the surface layer **4.** As the electroplating process progresses, the zinc coating **3** thickens and the metal crystallizes and grows, then, the organic saccharide additives are uniformly adsorbed on the zinc coating **3** and decompose at high temperatures to form micropores **6.** The micropores **6** in the surface layer **4** are small and narrow in comparison with the micropores **6** formed on an interface between the surface layer **4** and the Cu-Zn alloy layer **5.**

At the beginning of the electroplating process, the organic saccharide additives are first absorbed on the surface of the brass core **2.** The surface of the brass core 2 is not smooth enough, and the surface of the brass core 2 will inevitably suffer from some defects, such as scratches, during the preparation process, so more organic saccharide additives are adsorbed at the defects on the surface of the brass core 2. The Cu-Zn alloy layer **5** and the surface layer **4** are formed after the first stretching and extruding and the heat treatment. During the heat treatment, the organic saccharide additives absorbed at the surface defects of the brass core 2 decompose at high temperatures, so that the widen micropores **6** are unevenly formed on the interface between the Cu-Zn alloy layer **5** and the surface layer **4;** and the surface layer **4** is also known as a cladding layer.

An electrode wire for wire cut electrical discharge machining (WEDM) and a method for manufacturing the same of the disclosure will be further described in detail below with reference to examples.

### Example 1

The manufacturing method of the electrode wire includes steps described below.
1) preparing a brass core including CuZn37, and a diameter of the brass core is 0.82 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 6.8 µm; the concentration of the organic saccharide additives is 25 g/L; the electroplating rate is 240 m/min; the electric current is 1200 A; and the electric voltage is 6.2 V;
   The formula of the electroplating solution is known is the art, such as zinc sulfate 450-550 g/L. Such formula is also used in the following examples 2∼15, and is repeated in the following examples 2~15 for brevity. Compared with such formula, the electroplating solution of the disclosure also includes organic saccharide additives (the concentration of the organic saccharide additives in this example is 25g/L);
3) Stretching and extruding, by using a wire drawing die, a rod obtained through the electroplating process so that the diameter of the rod is 0.6 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 400°C, the rod with cracks, which is obtained through first stretching and extruding, in a furnace for 6 hours, cooling the furnace to less than 150°C and taking the rod out of the furnace, thus obtaining a heat treated rod including a continuous Cu-Zn alloy layer and a coating layer with several cracks, where air is continuously supplied to the furnace during the heating treatment;

The working principle of the heat treatment in step 4) is briefly described as follows: at the beginning of the heat treatment, copper ions in the brass core diffuse to the zinc coating, and zinc ions in the zinc coating diffuse to the brass core, thereby forming a Cu-Zn alloy layer with a low content of copper. Meanwhile, the dense zinc coating prevents the passage of oxygen (O₂) in the environment, the organic saccharide additives decompose into carbon (C) and water (H₂O), forming a plurality of micropores in the zinc coating. Then, Oxygen in the air in the furnace penetrates into the zinc coating from outside to inside along the micropores, reacts with C in the micropores to generate CO₂, and reacts with copper ions and zinc ions around the micropores to generate CuO, ZnO respectively. The micropores act as a barrier that prevents the copper ions in the brass core from continually diffusing into the zinc coating. Therefore, a Cu-Zn alloy layer and a surface layer are formed outside the brass core with the micropores served as the boundary. The size of a micropore in the surface layer is small, and the size of a micropore on the interface between the surface layer and the Cu-Zn alloy layer is large.

In the subsequent heating treatment, since Cu element cannot diffuse from the brass core into the surface layer, in an area far from the micropores in the surface layer, Cu and Zn elements form a Cu-Zn intermetallic compound at high temperatures. Since the Cu-Zn alloy layer and the brass core are not blocked by micropores, the copper and zinc elements in the Cu-Zn alloy layer can easily diffuse with the brass core to form a stable β' phase or a β'+ y phase. Understandably, the β phase is a high-temperature phase and the β' phase is a low-temperature phase of the β phase; the β phase and the β' phase transition into one another when the temperature changes. During the cooling process, a portion of copper in the surface layer reacts with O₂, CO₂, and H₂O in the surrounding environment to form CuO and Cu₂(OH)₂CO₃, resulting in a heat-treated rod including a continuous Cu-Zn alloy layer and a surface layer with several cracks. The principle and process of the heat treatment described in the above two paragraphs are the same as those in the following examples 2~15, and will not be repeated the following examples 2~15 for brevity.

5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 77% of the Cu-Zn alloy layer is covered by the surface layer; the thickness of the surface layer is 4 µm;each of the micropores (including micropores in the surface layer and micropores between the surface layer and the Cu-Zn alloy layer) is 0.078∼1.8 µm in diameter (the size of the micropores is also suitable for examples 2~15, which will not be repeated below for brevity); the surface layer includes 4.3% by mass of CuO, 53.8% by mass of ZnO, 9.3% by mass of Cu₂(OH)₂CO₃, and 32.6% by mass of the Cu-Zn intermetallic compound; and the Cu-Zn alloy layer has a thickness of 8 µm and includes a β' phase component.

### Example 2

A manufacturing method of the electrode wire includes steps described below.
1) preparing a brass core including CuZn40, and the diameter of the brass core is 0.9 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 9 µm; the concentration of the organic saccharide additives is 28 g/L; the electroplating rate is 200 m/min; the electric current is 1350 A; and the electric voltage is 7 V.
3) Stretching and extruding, by using a wire drawing die, a rod obtained through the electroplating process so that the diameter of the rod is 0.62 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating.
4) heating, at 400°C, the rod with cracks, which is obtained through first stretching and extruding, in a furnace for 10 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment.
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 80% of the Cu-Zn alloy layer is covered by the surface layer; the thickness of the surface layer is 7 µm; each of the micropores in the surface layer is 0.080~2.8 µm in diameter; the surface layer includes 4% by mass of CuO, 55% by mass of ZnO, 10% by mass of Cu₂(OH)₂CO₃, and 31% by mass of the Cu-Zn intermetallic compound; and the Cu-Zn alloy layer has a thickness of 10 µm and includes a β' phase component.

### Example 3

A manufacturing method of the electrode wire includes steps described below.
1) preparing a brass core including CuZn37, and the diameter of the brass core is 0.8 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 6.5 µm; the concentration of the organic saccharide additives is 22 g/L; the electroplating rate is 250 m/min; the electric current is 1150 A; and the electric voltage is 6.5 V.
3) Stretching and extruding, by using a wire drawing die, a rod obtained through the electroplating process so that the diameter of the rod is 0.6 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating.
4) heating, at 320°C, the rod with cracks, which is obtained through first stretching and extruding, in a furnace for 3.5 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment.
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 78% of the Cu-Zn alloy layer is covered by the surface layer; the thickness of the surface layer is 3 µm; each of the micropores in the surface layer is 0.035∼1.6 µm in diameter; the surface layer includes 7.2% by mass of CuO, 48.7% by mass of ZnO, 5.1% by mass of Cu₂(OH)₂CO₃, and 39% by mass of the Cu-Zn intermetallic compound; and the Cu-Zn alloy layer has a thickness of 6.8 µm and includes a (β'+γ) phase component.

### Example 4

A manufacturing method of the electrode wire includes steps described below.
1) preparing a brass core including CuZn37, and the diameter of the brass core is 0.8 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 7.8 µm; the concentration of the organic saccharide additives is 26 g/L; the electroplating rate is 235 m/min; the electric current is 1260 A; and the electric voltage is 6.7 V;
3) Stretching and extruding, by using a wire drawing die, a rod obtained through the electroplating process so that the diameter of the rod is 0.61 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 350°C, the rod with cracks, which is obtained through first stretching and extruding, in a furnace for 10 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 82% of the Cu-Zn alloy layer is covered by the surface layer; the thickness of the surface layer is 5.6 µm; each of the micropores in the surface layer is 0.06∼1.75 µm in diameter; the surface layer includes 5.2% by mass of CuO, 51.8% by mass of ZnO, 7.8% by mass of Cu₂(OH)₂CO₃, and 35.2% by mass of the Cu-Zn intermetallic compound; and the Cu-Zn alloy layer has a thickness of 8.3 µm and includes a β' phase component.

### Example 5

A manufacturing method of the electrode wire includes steps described below.
1) preparing a brass core including CuZn40, and the diameter of the brass core is 0.78 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 6.3 µm; the concentration of the organic saccharide additives is 20 g/L; the electroplating rate is 270 m/min; the electric current is 1080 A; and the electric voltage is 5.9 V;
3) Stretching and extruding, by using a wire drawing die, a rod obtained through the electroplating process so that the diameter of the rod is 0.6 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 375°C, the rod with cracks, which is obtained through first stretching and extruding, in a furnace for 5hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 85% of the Cu-Zn alloy layer is covered by the surface layer; the thickness of the surface layer is 3.5 µm; each of the micropores in the surface layer is 0.05∼1.78 µm in diameter; the surface layer includes 4.9% by mass of CuO, 52.4% by mass of ZnO, 8.2% by mass of Cu₂(OH)₂CO₃, and 34.5% by mass of the Cu-Zn intermetallic compound; and the Cu-Zn alloy layer has a thickness of 6.3 µm and includes a β' phase component.

### Example 6

A manufacturing method of the electrode wire includes steps described below.
1) preparing a brass core including CuZn37, and the diameter of the brass core is 0.76 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 6.1 µm; the concentration of the organic saccharide additives is 24 g/L; the electroplating rate is 275 m/min; the electric current is 1090 A; and the electric voltage is 6 V;
3) Stretching and extruding, by using a wire drawing die, a rod obtained through the electroplating process so that the diameter of the rod is 0.57 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 330°C, the rod with cracks, which is obtained through first stretching and extruding, in a furnace for 3 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 81% of the Cu-Zn alloy layer is covered by the surface layer; the thickness of the surface layer is 3.4 µm; each of the micropores in the surface layer is 0.38∼1.65 µm in diameter; the surface layer includes 6.8% by mass of CuO, 49.6% by mass of ZnO, 5.8% by mass of Cu₂(OH)₂CO₃, and 37.8% by mass of the Cu-Zn intermetallic compound; and the Cu-Zn alloy layer has a thickness of 6 µm and includes a (β'+γ) phase component.

### Example 7

A manufacturing method of the electrode wire includes steps described below.
1) preparing a brass core including CuZn37, and the diameter of the brass core is 0.74 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.9 µm; the concentration of the organic saccharide additives is 18 g/L; the electroplating rate is 280 m/min; the electric current is 1030 A; and the electric voltage is 5.8 V;
3) Stretching and extruding, by using a wire drawing die, a rod obtained through the electroplating process so that the diameter of the rod is 0.56 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 300°C, the rod with cracks, which is obtained through first stretching and extruding, in a furnace for 4.5 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 76% of the Cu-Zn alloy layer is covered by the surface layer; the thickness of the surface layer is 2.8 µm; each of the micropores in the surface layer is 0.024∼1.62 µm in diameter; the surface layer includes 8.0% by mass of CuO, 46.9% by mass of ZnO, 4.1% by mass of Cu₂(OH)₂CO₃, and 41% by mass of the Cu-Zn intermetallic compound; and the Cu-Zn alloy layer has a thickness of 6.2 µm and includes a (β'+γ) phase component.

### Example 8

A manufacturing method of the electrode wire includes steps described below.
1) preparing a brass core including CuZn37, and the diameter of the brass core is 0.72 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.8 µm; the concentration of the organic saccharide additives is 16 g/L; the electroplating rate is 285 m/min; the electric current is 1020 A; and the electric voltage is 5.75 V;
3) Stretching and extruding, by using a wire drawing die, a rod obtained through the electroplating process so that the diameter of the rod is 0.55 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 340°C, the rod with cracks, which is obtained through first stretching and extruding, in a furnace for 8 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 86% of the Cu-Zn alloy layer is covered by the surface layer; the thickness of the surface layer is 3.2 µm; each of the micropores in the surface layer is 0.042∼1.68 µm in diameter; the surface layer includes 5.6% by mass of CuO, 51.5% by mass of ZnO, 7.4% by mass of Cu₂(OH)₂CO₃, and 35.5% by mass of the Cu-Zn intermetallic compound; and the Cu-Zn alloy layer has a thickness of 5.9 µm and includes a β' phase component.

### Example 9

A manufacturing method of the electrode wire includes steps described below.
1) preparing a brass core including CuZn40, and the diameter of the brass core is 0.7mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.5 µm; the concentration of the organic saccharide additives is 15 g/L; the electroplating rate is 300 m/min; the electric current is 990 A; and the electric voltage is 5.7 V;
3) Stretching and extruding, by using a wire drawing die, a rod obtained through the electroplating process so that the diameter of the rod is 0.53 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 285°C, the rod with cracks, which is obtained through first stretching and extruding, in a furnace for 5.5 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 80% of the Cu-Zn alloy layer is covered by the surface layer; the thickness of the surface layer is 2.5 µm; each of the micropores in the surface layer is 0.017∼1.25 µm in diameter; the surface layer includes 8.4% by mass of CuO, 46.2% by mass of ZnO, 3.6% by mass of Cu₂(OH)₂CO₃, and 41.8% by mass of the Cu-Zn intermetallic compound; and the Cu-Zn alloy layer has a thickness of 6 µm and includes a (β'+γ) phase component.

### Example 10

A manufacturing method of the electrode wire includes steps described below.
1) preparing a brass core including CuZn37, and the diameter of the brass core is 0.68 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.4 µm; the concentration of the organic saccharide additives is 15 g/L; the electroplating rate is 320 m/min; the electric current is 988 A; and the electric voltage is 5.68 V;
3) Stretching and extruding, by using a wire drawing die, a rod obtained through the electroplating process so that the diameter of the rod is 0.53 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 330°C, the rod with cracks, which is obtained through first stretching and extruding, in a furnace for 9 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 95% of the Cu-Zn alloy layer is covered by the surface layer; the thickness of the surface layer is 2.9 µm; each of the micropores in the surface layer is 0.036∼1.4 µm in diameter; the surface layer includes 5.9% by mass of CuO, 50.9% by mass of ZnO, 7.1% by mass of Cu₂(OH)₂CO₃, and 36.1% by mass of the Cu-Zn intermetallic compound; and the Cu-Zn alloy layer has a thickness of 5.8 µm and includes a β' phase component.

### Example 11

A manufacturing method of the electrode wire includes steps described below.
1) preparing a brass core including CuZn37, and the diameter of the brass core is 0.66 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.3 µm; the concentration of the organic saccharide additives is 12 g/L; the electroplating rate is 345 m/min; the electric current is 985 A; and the electric voltage is 5.65 V;
3) Stretching and extruding, by using a wire drawing die, a rod obtained through the electroplating process so that the diameter of the rod is 0.51 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 280°C, the rod with cracks, which is obtained through first stretching and extruding, in a furnace for 6 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 75% of the Cu-Zn alloy layer is covered by the surface layer; the thickness of the surface layer is 2.3 µm; each of the micropores in the surface layer is 0.014∼1.22 µm in diameter; the surface layer includes 8.7% by mass of CuO, 45.7% by mass of ZnO, 3.3% by mass of Cu₂(OH)₂CO₃, and 42.3% by mass of the Cu-Zn intermetallic compound; and the Cu-Zn alloy layer has a thickness of 5.5 µm and includes a (β'+γ) phase component.

### Example 12

A manufacturing method of the electrode wire includes steps described below.
1) preparing a brass core including CuZn37, and the diameter of the brass core is 0.66 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.2 µm; the concentration of the organic saccharide additives is 11 g/L; the electroplating rate is 350 m/min; the electric current is 980 A; and the electric voltage is 5.6 V;
3) Stretching and extruding, by using a wire drawing die, a rod obtained through the electroplating process so that the diameter of the rod is 0.5 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 320°C, the rod with cracks, which is obtained through first stretching and extruding, in a furnace for 8 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 89% of the Cu-Zn alloy layer is covered by the surface layer; the thickness of the surface layer is 2.6 µm; each of the micropores in the surface layer is 0.024∼1.18 µm in diameter; the surface layer includes 6.4% by mass of CuO, 50.3% by mass of ZnO, 6.6% by mass of Cu₂(OH)₂CO₃, and 36.7% by mass of the Cu-Zn intermetallic compound; and the Cu-Zn alloy layer has a thickness of 5.3 µm and includes a β' phase component.

### Example 13

A manufacturing method of the electrode wire includes steps described below.
1) preparing a brass core including CuZn40, and the diameter of the brass core is 0.65 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5.1 µm; the concentration of the organic saccharide additives is 11 g/L; the electroplating rate is 360 m/min; the electric current is 975 A; and the electric voltage is 5.55 V;
3) Stretching and extruding, by using a wire drawing die, a rod obtained through the electroplating process so that the diameter of the rod is 0.49 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 320°C, the rod with cracks, which is obtained through first stretching and extruding, in a furnace for 2 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 76% of the Cu-Zn alloy layer is covered by the surface layer; the thickness of the surface layer is 2.2 µm; each of the micropores in the surface layer is 0.015~1.05 µm in diameter; the surface layer includes 7.8% by mass of CuO, 47.6% by mass of ZnO, 4.5% by mass of Cu₂(OH)₂CO₃, and 40.1% by mass of the Cu-Zn intermetallic compound; and the Cu-Zn alloy layer has a thickness of 5.2 µm and includes a (β'+γ) phase component.

### Example 14

A manufacturing method of the electrode wire includes steps described below.
1) preparing a brass core including CuZn37, and the diameter of the brass core is 0.63 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 5 µm; the concentration of the organic saccharide additives is 10 g/L; the electroplating rate is 385 m/min; the electric current is 970 A; and the electric voltage is 5.5 V;
3) Stretching and extruding, by using a wire drawing die, a rod obtained through the electroplating process so that the diameter of the rod is 0.47 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 260°C, the rod with cracks, which is obtained through first stretching and extruding, in a furnace for 4 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 72% of the Cu-Zn alloy layer is covered by the surface layer; the thickness of the surface layer is 2.1 µm; each of the micropores in the surface layer is 0.012∼0.95 µm in diameter; the surface layer includes 9.2% by mass of CuO, 44.6% by mass of ZnO, 2.7% by mass of Cu₂(OH)₂CO₃, and 43.5% by mass of the Cu-Zn intermetallic compound; and the Cu-Zn alloy layer has a thickness of 5 µm and includes a (β'+γ) phase component.

### Example 15

A manufacturing method of the electrode wire includes steps described below.
1) preparing a brass core including CuZn37, and the diameter of the brass core is 0.6 mm;
2) placing the brass core obtained in step 1) in an electroplating solution including organic saccharide additives, and forming a zinc coating on the surface of the brass core through an electroplating process, where the organic saccharide additives include at least one selected from the group consisting of sucrose, lactose and maltose; the thickness of the zinc coating is 4.5 µm; the concentration of the organic saccharide additives is 8 g/L; the electroplating rate is 400 m/min; the electric current is 965 A; and the electric voltage is 5.2 V;
3) Stretching and extruding, by using a wire drawing die, a rod obtained through the electroplating process so that the diameter of the rod is 0.48 mm, during the stretching and extruding, the zinc coating which is dense, hard and brittle cracks in a direction perpendicular to the axis of the rod and at an acute angle of greater than 30 degrees with respect to the axis of the rod, that is, yielding a rod with several cracks which is obtained by first stretching and extruding the zinc coating;
4) heating, at 200°C, the rod with cracks, which is obtained through first stretching and extruding, in a furnace for 6 hours, cooling the furnace to less than 150°C and taking the rod out of the furnace, thus obtaining a heat-treated rod including a continuous Cu-Zn alloy layer and a surface layer with several cracks, where air is continuously supplied to the furnace during the heating treatment;
5) Stretching and extruding, by using the wire drawing die, the heat-treated rod again so that the diameter of the rod is 0.25 mm, and obtaining a finished electrode wire including the surface layer and the Cu-Zn alloy layer; the surface layer is in the shape of sheets or particles, and the Cu-Zn alloy layer is exposed with respect to spaces between the particles or sheets; 70% of the Cu-Zn alloy layer is covered by the surface layer; the thickness of the surface layer is 2 µm; each of the micropores in the surface layer is 0.010∼0.92 µm in diameter; the surface layer includes 9.5% by mass of CuO, 444% by mass of ZnO, 2% by mass of Cu₂(OH)₂CO₃, and 44.5% by mass of the Cu-Zn intermetallic compound; and the Cu-Zn alloy layer has a thickness of 4 µm and includes a (β'+γ) phase component.

### Comparison examples 1~5

Comparison example 1: a brass electrode wire with a diameter of 0.25mm purchased on the market;
Comparison example 2: a galvanized electrode wire with a diameter of 0.25mm purchased on the market, and the galvanized electrode wire has a pure zinc coating;
Comparison example 3: a Gamma electrode wire with a diameter of 0.25 mm purchased on the market, which is widely used and the coating is γ phase;
Comparison example 4: a high-speed electrode wire with a diameter of 0.25 mm purchased on the market, the coating of which is β'+ γ phase; and
Comparison example 5: a high-speed electrode wire with a diameter of 0.25 mm purchased on the market, the coating of which is β' phase.

**Table 1: Process data of Examples 1 to 15**

| Example | Diameter of core (mm) | Thickness of coating (µm) | Conce ntratio n (g/L) | Electropl ating rate (m/min) | Electric current (A) | Voltage (V) | Diameter after first stretching (mm) | Thermal treatment temperatur e(°C) | Heating time (h) |
|---|---|---|---|---|---|---|---|---|---|
| 1 | 0.82 | 6.8 | 25 | 240 | 1200 | 6.2 | 0.6 | 400 | 6 |
| 2 | 0.9 | 9 | 28 | 200 | 1350 | 7 | 0.62 | 400 | 10 |
| 3 | 0.8 | 6.5 | 22 | 250 | 1150 | 6.05 | 0.6 | 320 | 3.5 |
| 4 | 0.8 | 7.8 | 26 | 235 | 1260 | 6.7 | 0.61 | 350 | 10 |
| 5 | 0.78 | 6.3 | 20 | 270 | 1080 | 5.9 | 0.6 | 375 | 5 |
| 6 | 0.76 | 6.1 | 24 | 275 | 1090 | 6 | 0.57 | 330 | 3 |
| 7 | 0.74 | 5.9 | 18 | 280 | 1030 | 5.8 | 0.56 | 300 | 4.5 |
| 8 | 0.72 | 5.8 | 16 | 285 | 1020 | 5.75 | 0.55 | 340 | 8 |
| 9 | 0.7 | 5.5 | 15 | 300 | 990 | 5.7 | 0.53 | 285 | 5.5 |
| 10 | 0.68 | 5.4 | 15 | 320 | 988 | 5.68 | 0.53 | 330 | 9 |
| 11 | 0.66 | 5.3 | 12 | 345 | 985 | 5.65 | 0.51 | 280 | 6 |
| 12 | 0.66 | 5.2 | 11 | 350 | 980 | 5.6 | 0.5 | 320 | 8 |
| 13 | 0.65 | 5.1 | 11 | 360 | 975 | 5.55 | 0.49 | 320 | 2 |
| 14 | 0.63 | 5 | 10 | 385 | 970 | 5.5 | 0.48 | 260 | 4 |
| 15 | 0.6 | 4.5 | 8 | 400 | 965 | 5.2 | 0.47 | 200 | 6 |

**Table 2 Data of components of surface layer, coverage rate of Cu-Zn alloy, and diameter of micropores**

| Example | Coverage rate | Diameter of micropores (µm) | CuO (wt. %) | ZnO (wt. %) | Cu₂(OH)₂CO₃ (wt. %) | Cu-Zn intermetallic compound (wt. %) |
|---|---|---|---|---|---|---|
| 1 | 77% | 0.078-1.8 | 4.3% | 53.8% | 9.3% | 32.6% |
| 2 | 80% | 0.080-2.0 | 4.0% | 55.0% | 10.0% | 31.0% |
| 3 | 78% | 0.035-1.6 | 7.2% | 48.7% | 5.1% | 39.0% |
| 4 | 82% | 0.06-1.75 | 5.2% | 51.8% | 7.8% | 35.2% |
| 5 | 85% | 0.05-1.78 | 4.9% | 52.4% | 8.2% | 34.5% |
| 6 | 81% | 0.038-1.65 | 6.8% | 49.6% | 5.8% | 37.8% |
| 7 | 76% | 0.024-1.62 | 8.0% | 46.9% | 4.1% | 41.0% |
| 8 | 86% | 0.042-1.68 | 5.6% | 51.5% | 7.4% | 35.5% |
| 9 | 80% | 0.017-1.25 | 8.4% | 46.2% | 3.6% | 41.8% |
| 10 | 95% | 0.036-1.4 | 5.9% | 50.9% | 7.1% | 36.1% |
| 11 | 75% | 0.014-1.22 | 8.7% | 45.7% | 3.3% | 42.3% |
| 12 | 89% | 0.024-1.18 | 6.4% | 50.3% | 6.6% | 36.7% |
| 13 | 76% | 0.015-1.05 | 7.8% | 47.6% | 4.5% | 40.1% |
| 14 | 72% | 0.012-0.95 | 9.2% | 44.6% | 2.7% | 43.5% |
| 15 | 60% | 0.010-0.92 | 9.5% | 44.0% | 2.0% | 44.5% |

### Slow-feeding EDM testing:

The slow-feeding machine used for the testing is the widely used Swiss agieCharmilles CUT E350 machine. The workpiece to be processed is made from SKH-9, has a thickness 30 mm, and in a shape of 6×6 mm square punch. An electrode wire with a diameter of 0.25 mm is used to roughly cut the workpiece once and finish four times.

Compared with workpieces processed by using the electrode wires of examples 1~15 and workpieces processed by using the electrode wires of comparison examples 1~5 shown in table 3, the electrode wire of the present disclosure has noteworthy advantages in cutting speed and surface finish of the workpiece being processed. In particular, in comparison to the electrode wire of comparison example 1, the cutting speed of the electrode wire of the present disclosure is increased by 18.69% ~27.41% and the surface finish of the workpiece being processed is improved by 20.58%~28.03%.

**Table 3: Sample electrode wire and processing test data**

| | No | Thickness of surface layer | component of Cu-Zn alloy layer | Thickness of Cu-Zn alloy layer (µm) | Cutting speed (mm/min) | Improvement of cutting speed (%) | Surface finish of workpiece Ra(µm) | Improvement of surface finish (%) |
|---|---|---|---|---|---|---|---|---|
| Example | 1 | 4 | β' phase | 8 | 3.94 | 22.74 | 0.1556 | 21.69 |
| | 2 | 7 | β' phase | 10 | 4.09 | 27.41 | 0.1568 | 21.09 |
| | 3 | 3 | p' + γ phase | 6.8 | 4.03 | 25.55 | 0.1578 | 20.58 |
| | 4 | 5.6 | β' phase | 8.3 | 4.07 | 26.79 | 0.1552 | 21.89 |
| | 5 | 3.5 | β' phase | 6.3 | 3.98 | 22.12 | 0.1526 | 23.20 |
| | 6 | 3.4 | β' + γ phase | 6 | 3.93 | 22.43 | 0.1514 | 23.80 |
| | 7 | 2.8 | β' + γ phase | 6.2 | 3.95 | 23.05 | 0.1508 | 24.11 |
| | 8 | 3.2 | β' phase | 5.9 | 3.96 | 23.36 | 0.1524 | 23.30 |
| | 9 | 2.5 | β' + γ phase | 6 | 3.87 | 20.56 | 0.1439 | 27.58 |
| | 10 | 2.9 | β' phase | 5.8 | 3.9 | 21.50 | 0.1483 | 25.36 |
| | 11 | 2.3 | β' + γ phase | 5.5 | 3.93 | 22.43 | 0.143 | 28.03 |
| | 12 | 2.6 | β' phase | 5.3 | 3.94 | 22.74 | 0.1475 | 25.77 |
| | 13 | 2.2 | β' + γ phase | 5.2 | 3.96 | 23.36 | 0.1441 | 27.48 |
| | 14 | 2.1 | β' + γ phase | 5 | 3.82 | 19 | 0.1482 | 25.42 |
| | 15 | 2 | β' + γ phase | 4 | 3.81 | 18.69 | 0.1452 | 26.93 |
| Comparis on example | 1 | / | / | / | 3.21 | 0 | 0.1987 | 0 |
| | 2 | / | Zn | 2.5 | 3.25 | 1.25 | 0.1789 | 9.96 |
| | 3 | / | γ phase | 5 | 3.35 | 4.36 | 0.1824 | 8.20 |
| | 4 | / | β' + γ phase | 10 | 3.52 | 9.66 | 0.1825 | 8.15 |
| | 5 | / | β' phase | 12 | 3.48 | 8.41 | 0.1852 | 6.79 |

It will be obvious to those skilled in the art that changes and modifications may be made, and therefore, the aim in the appended claims is to cover all such changes and modifications.

## Claims

1. An electrode wire for electrical discharge machining, comprising:
a brass core (2);
a Cu-Zn alloy layer (5) formed on the brass core (2); and
a surface layer (4) arranged on a surface of Cu-Zn alloy layer (5),
wherein the surface layer (4) is in a shape of particles or sheets, the Cu-Zn alloy layer (5) is exposed with respect to spaces between the particles or sheets, and the surface layer (4) comprises CuO, ZnO, Cu₂(OH)₂CO₃, and a Cu-Zn intermetallic compound.

2. The electrode wire according to claim 1, wherein the surface layer (4) comprises 4%~9.5% by mass of CuO, 44%~55% by mass of ZnO, 2%∼10% by mass of Cu₂(OH)₂CO₃, and 31%~ 44.5% by mass of the Cu-Zn intermetallic compound.

3. The electrode wire according to claim 1, wherein the surface layer (4) comprises a plurality of micropores, and each of the micropores has a size of 0.01~2 µm along a cross section of the electrode wire.

4. The electrode wire according to claim 1, wherein an area of 60%~95% of the surface of the Cu-Zn alloy layer (5) is covered by the surface layer (4).

5. The electrode wire according to claim 1, wherein the surface layer (4) has a thickness ranging from 2 µm to 7 µm.

6. The electrode wire according to claim 1, wherein the Cu-Zn alloy layer (5) comprises a β' phase component or a β'+ y phase component.

7. The electrode wire according to claim 1, wherein the Cu-Zn alloy layer (5) has a thickness ranging from 4µm to 10 µm.

8. A method for manufacturing the electrode wire according to any one of claims 1 to 7, the method comprising:
1) preparing a brass core with a diameter ranging from 0.6 mm to 0.9 mm;
2) forming a zinc coating on the surface of the brass core obtained in step 1) through an electroplating process, wherein an electroplating solution for the electroplating process comprises organic saccharide additives, and, during the electroplating process, the organic saccharide additives absorb zinc ions and slow down a cathodic reduction reaction of the zinc ions, slow down a crystallization rate of the zinc coating and refine crystalline grains of the zinc coating, so that the zinc coating comprises the organic saccharide additives component and is dense, hard, and brittle, wherein a concentration of the organic saccharide additives is 8~25 g/L, an electroplating rate is 200-400 m/min, an electric current is 965-1350 A, an electric voltage is 5.2~7 V and the zinc coating has a thickness of 4.5~9 µm;
3) stretching and extruding, by using a wire drawing die, a rod obtained through the electroplating process so that the diameter of the rod is 0.47∼0.62 mm, during the stretching and extruding, the zinc coating which is dense, hard and brittle cracks in a direction perpendicular to the axis of the rod and at an acute angle of greater than 30 degrees with respect to the axis of the rod, and yielding a rod with cracks which is obtained by first stretching and extruding the zinc coating;
4) heating, at 200°C to 400°C, the rod with cracks, which is obtained through first stretching and extruding, in a furnace for 2~10 hours, cooling the furnace to less than 150°C and taking the rod out of the furnace, thus obtaining a heat-treated rod comprising a continuous Cu-Zn alloy layer and a surface layer with cracks, wherein air is continuously supplied to the furnace during the heating; and
5) obtaining a finished electrode wire with a diameter of 0.15∼0.30 mm by stretching and extruding the heat-treated rod via the wire drawing die again, wherein the surface layer of the electrode wire is in the shape of particles or sheets, and the Cu-Zn alloy layer is exposed with respect to spaces between the particles or sheets.

9. The method according to claim 8, wherein the organic saccharide additives comprise at least one selected from a group consisting of sucrose, lactose and maltose.

10. The method according to claim 8, wherein a stretching-extruding rate of the rod in step 3) is 35%~65%; and a stretching-extruding rate of the rod in step 5) is 55%~95%.
